# EUROPEAN PATENT APPLICATION

(11) **EP 0 974 311 A1**
(43) Date of publication of application: **26.01.2000**
(21) Application number: 99500091.6
(22) Date of filing: 03.06.1999
(51) Int. Cl.: A61C 8/00

(54) **Dental implant piece**

(30) Priority: 08.07.1998 ES 9801443; 13.04.1999 ES 9900763
(71) Applicant: Perona Alvaro, Manuel, 01004 Vitoria, Alava (ES)
(72) Inventor: Perona Alvaro, Manuel, 01004 Vitoria, Alava (ES)
(74) Representative: Davila Baz, Angel

(57) **Abstract**

The piece, designed for dental osseointegration implants, is made of a biocompatible matenal such as titanium and consists of a body (1, 1') of a generally cylindrical shape, with a smooth segment (2, 2') with its free end (4, 4') round and a threaded cylindrical segment (3, 3') ending with a short cylindrical segment (5, 5') on which the corresponding polygonal head (7,7') of the implant is established. The entire length defined by both segments (2, 2') (3, 3') is provided with double-ruled grooves (6, 6') equidistant from each other. The piece constitutes a mixed implant which may be placed in the patient by a simple surgical technique without perforating the sinus mucous.

## Description

The invention relates to a dental implant piece, specifically for dental osseointegration implants, made of titanium, which is a biocompatible material, so that the structural properties of the implant piece are such that they allow placing it in areas which it is not now possible with conventional implants.

The object of the invention is to provide a dental implant piece which allows implanting it on the patient by a simple surgical technique in the bone area of the maxillary sinus, without perforating the sinus mucous, and making possible a later formation of bone under said sinus mucous around the implant, in the area placed within the sinus space.

At the present time, placing osseointegrated implants in the sinus area with limited bone support leads to failure, in some cases due to a limited bone support and in others to the mechanical perforation of the sinus mucous, with the corresponding consequences.

Obviously there exist dental implants of titanium, as a biocompatible material, although they are seldom used because of problems which in many cases prevent placing these in the upper premolar and molar areas, in relation to the maxillary sinus, especially in those cases where as mentioned before there is insufficient bone thickness to place the implant.

Although techniques exist which attempt to solve this difficulty, such as elevating the sinus floor, these are complex, difficult to perform and unknown to most odonto-stomatology professionals.

Nowadays two dental implant pieces are known, one with a cylindrical shape, which has the risk of the implant reaching the inside of the sinus cavity, and a second which is threaded and which perforates the sinus mucous.

The dental implant piece proposed is designed to solve this problem to full satisfaction, so that using a biocompatible material, i.e. titanium, it has the particular characteristic of being mixed, i.e., with a cylindrical segment and another threaded segment, with the cylindrical segment corresponding to the end of the piece or implant, which finishes in a hemisphere, while the segment corresponding to the head is threaded, and also cylindrical.

The piece or implant is provided along its entire length of longitudinal grooves, equidistant from each other, and in double ruling, with these grooves naturally being less profound in the smooth cylindrical segment than in the threaded segment.

As for the threaded cylindrical segment, it extends towards the head, sometimes with a cylindrical shape and in variable lengths, allowing it to be placed in two surgical stages, which is the normal procedure, or in a single stage, this end finishing in a corresponding hexagonal head with standard measures allowing an exact adjustment of the transepithelial or golden cylinder in the dental prosthesis to be placed, joined to the implant, for which the existence in the inner implant face of a threaded space is required, where a standard screw can be fitted which will support the prosthesis or the transepithelial to the implant.

This implant is placed by a careful technique in handling of surgical drills and special instruments in order to avoid perforating the sinus mucous, allowing to slowly introduce the implant through its threaded segment. The elevation of the maxillary sinus mucous will be taken up by a blood clot from which the new bone tissue will form around the implant area, so that the intended objective is achieved.

According to a second version of the invention, the axial grooves of the cylindrical body which makes up the dental implant piece have a truncated cone shaped surface, with an increasing section from the non-threaded segment, with these grooves crossing the wider area which limits the threaded segment, and ending almost tangent to the faces of the polygonal head.

The construction described is completed by a set of wedges, as many as there are grooves, which are truncated cones, with diameters matching those of the grooves.

These wedges are introduced through the grooves of the piece, once it is placed, in order to achieve a perfect attachment or fitting, both in the initial moment when they are placed and after a certain time; thus the invention provides an immediate loading implant.

The wedges introduced through the grooves of the cylindrical piece prevent rotation of the implant.

As a complement of the description being made, and in order to aid a better understanding of the characteristics of the invention, according to a preferred embodiment, a set of drawings are attached as an integral part of said description where for purposes of illustration and in a non-limiting sense the following is shown:

Figure 1.- Shows a side elevation view of the dental implant piece constructed according to the object of this invention.

Figure 2.- Shows the outline of the smooth cylindrical segment of the piece shown in figure 1, also showing the double-ruled grooves.

Figure 3.- Shows the outline of the threaded cylindrical segment of the same piece shown in figure 1, also showing the double-ruled grooves.

Figure 4 shows a side elevation of a piece for dental implants according to a second version of the invention.

Figure 5 shows the outline of the end of the smooth segment of the cylindrical piece shown in figure 4.

Figure 6 shows a top view of the piece of figure 4.

Figure 7 is a side elevation of one of the wedges which can be fitted onto the piece of figure 4.

Figure 8 is an outline of the bottom of the wedge of figure 7.

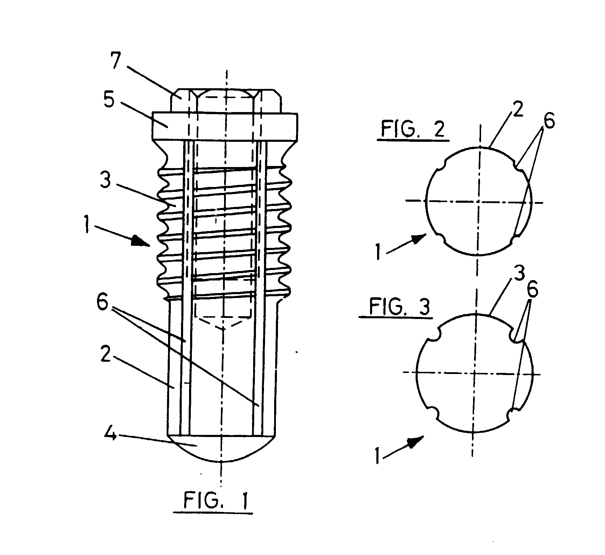

As shown in figures 1 to 3, dental osseointegration implant piece (1), made of titanium as a biocompatible material, consists of a cylindrical body with two segments, one labelled (2) which is smooth and another threaded one labelled (3), so that smooth cylindrical segment (2) ends on its free end (4) in a hemisphere, while threaded segment (3) extends towards the head as a small cylindrical section (5).

All of piece (1), that is, from its end (4) to its opposite cylindrical end (5) is provided with double-ruled grooves (6), equidistant from each other, and naturally with the grooves in the threaded segment (3) being deeper.

As a result, the implant of piece (1) is a mixed implant, where the smooth cylindrical segment (2) will preferably have a length between 4 and 5 mm. and a diameter between 2 and 4 mm., while the threaded cylindrical segment (3) will have a length between 5 and 13 mm. depending on the cases, and a diameter between 2.8 and 5 mm.

The cylindrical segment (5) which corresponds to the end of the threaded segment (3) will have a length varying between 1 and 6 mm., allowing it to be placed in two surgical stages or in a single one.

The above mentioned cylindrical segment (5) continues and ends in the corresponding hexagonal head (7) of standard measures, allowing an exact adjustment of the transepithelial or gold cylinder in the prosthesis to be placed and joined to the implant in question.

With this new implant made of a biocompatible material (titanium), which is mixed, it can be placed by a simple surgical technique without perforating the sinus mucous, but nevertheless allowing a later bone formation under this mucous and around the implant itself, in the area inside the sinus space.

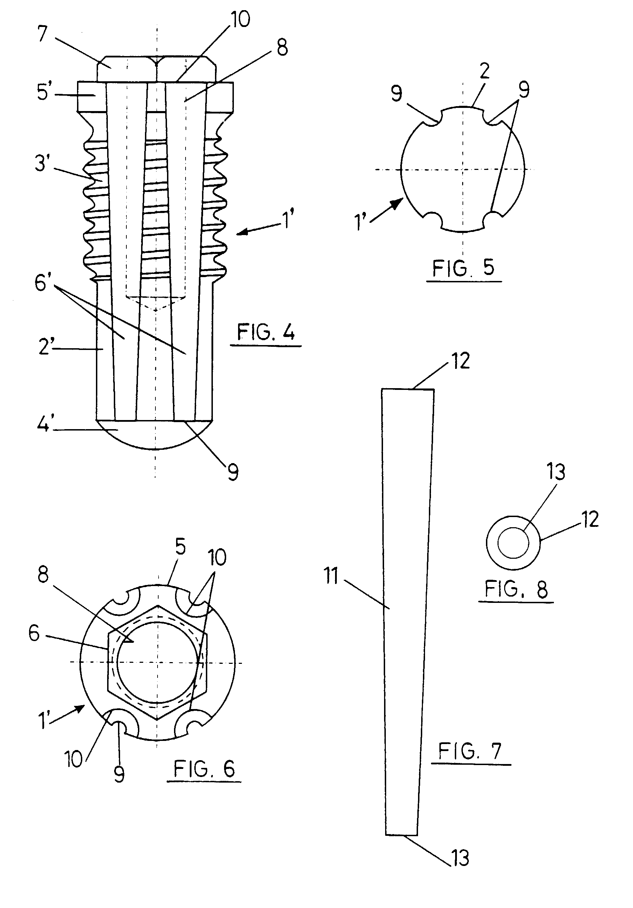

The piece shown in figures 4 to 6 is also cylindrical in shape and is made of a biocompatible material, such as titanium, This piece, labelled as (1'), also includes a smooth segment (2') and a threaded segment (3'). The end of smooth segment (2') may be a curved convex surface (4'). Threaded segment (3') ends in a cylindrical segment (5) of a greater diameter and small height, after which a polygonal head (7') projects out. The free end of this polygonal head (7') continues with a threaded drill (8), which will be used to attach the dental implant.

The surface of piece (1') has longitudinal grooves (6') with a truncated cone surface, which cross cylindrical segment (5'), ending nearly tangent to the faces of polygonal head (7'), as seen best in figure 6.

Grooves (6') gradually increase their section from the end of smooth segment (2') to the cylindrical segment (5'). The smaller surface of grooves (6') labelled as (9), is adjacent to the curved convex surface (4') which limits smooth segment (2') while the larger surface of grooves (6'), labelled as (10), remains near or tangent to the flat faces of polygonal head (7').

According to this version, the piece is completed by a number of wedges such as is shown in figure 7', equal in number to the grooves (6') of piece (1'). These wedges, labelled as (11), are truncated cones in shape, with the radius of ends (12) and (13) matching, respectively, maximum (10) and minimum (9) sections of grooves (6').

With the described construction, once piece (1') is placed the full setting can be performed by placing wedges (11) which are introduced in grooves (6') of piece (1')

These wedges may be placed at the time of placing piece (1'), so that they are immediately locked.

On the contrary, piece (1') can be placed traditionally, without wedges (11), which would be introduced only after a certain time after the implant, in case any play develops.

## Claims

1. Piece for dental implants, made of a biocompatible material such as titanium, and designed for osseointegration dental implants, consisting of a cylindrical body, characterised by having a smooth cylindrical segment (2, 2') and a threaded cylindrical segment (3, 3'), the entire length defined by segments (2, 2') and (3, 3') having grooves (6, 6') equidistant from each other.

2. Piece for dental implants, as in claim 1, characterised in that the smooth cylindrical segment (2, 2') has its free end (4, 4') rounded to a hemisphere.

3. Piece for dental implants, as in claim 1, characterised in that threaded cylindrical segment (3) is extended in a short cylindrical segment (5) on which the corresponding hexagonal head (7, 7') is established.

4. Piece for dental implants, as in claim 1, characterised in that four double-ruled grooves (6) are provided, angularly equidistant from each other, made between the start of the rounded end (4) of the smooth cylinder segment (2) and the start of cylindrical segment (5) at the end of the threaded segment (3).

5. Piece for dental implants, as in claim 1, characterised in that grooves (6') have a truncated cone shape, with a section increasing from the end (9) of smooth cylindrical body (2'), and which cross wider sector (5') at the end of threaded segment (3') to end near or tangent to the faces of the polygonal head (7').

6. Piece for dental implants, as in claim 5, characterised in that each of the above mentioned grooves houses a wedge (11) with a truncated cone shape, with radii matching these grooves (6').
